# EUROPÄISCHE PATENTSCHRIFT

(11) **EP 3 784 985 B1**
(45) Veröffentlichungstag und Bekanntmachung des Hinweises auf die Patenterteilung: **10.05.2023**
(21) Anmeldenummer: 19723006.3
(22) Anmeldetag: 17.04.2019
(51) Int. Cl.: G01C 15/00, H04N 13/39

(54) **VERFAHREN ZUR DARSTELLUNG EINER POSITIONIERLINIE IM RAUM**
METHOD OF GENERATING A POSITIONING LINE IN SPACE
PROCEDE POUR GENERER UNE LIGNE DE POSITIONNEMENT DANS L'ESPACE

(30) Priorität: 26.04.2018 DE 102018003416
(43) Veröffentlichungstag der Anmeldung: 03.03.2021
(73) Patentinhaber: Linde GmbH, 82049 Pullach (DE)
(72) Erfinder: SCHÖNBERGER, Manfred, 83342 Tacherting (DE); SEEHOLZER, Christoph, 83308 Trostberg (DE); ROMSTÄTTER, Markus, 83349 Palling (DE)
(74) Vertreter: Meilinger, Claudia Sabine
(86) Internationale Anmeldenummer: PCT/EP2019/025109
(87) Internationale Veröffentlichungsnummer: WO 2019/206454

(56) Entgegenhaltungen:
- EP-A1- 1 903 371
- EP-A1- 1 903 371
- WO-A2-2016/179158
- WO-A2-2016/179158
- CN-Y- 2 485 671
- CN-Y- 2 485 671
- DE-A1- 3 236 470

## Beschreibung

Die Erfindung betrifft ein Verfahren zur Darstellung wenigstens einer Positionierlinie im Raum, das als Montagehilfe verwendet wird.

Es sind Verfahren bekannt, bei denen mittels eines Lasers Projektionen auf eine Oberfläche geworfen werden. Dies wird in verschiedenen Produktions- und Montageverfahren verwendet, um optische Markierungen auf einer Oberfläche zu erzeugen, die dann als Hilfen für Bohrungen, Schweißarbeiten und andere Bearbeitungstätigkeiten herangezogen werden.

So offenbart US 9 200 899 ein Laserprojektionssystem, das ein Bild auf ein Werkstück projiziert. In diesem Beispiel sind die Position des Projektors relativ zu dem Werkstück, zusammen mit der dreidimensionalen Geometrie des Werkstücks und ein Befestigungsprofil vorbestimmt. Mittels dieser Elemente wird ein Umriss des Befestigungsprofils in Form einer optischen Vorlage präzise auf die gewünschte Werkstückoberfläche projiziert. Systeme, die eingesetzt werden, um Vorlagen derartige auf ein Werkstück zu projizieren, haben sich als hochpräzise und benutzerfreundlich erwiesen.

Alle diese Verfahren haben gemeinsam, dass sie eine Projektionsoberfläche voraussetzen, an der das Laserlicht reflektiert und für einen Benutzer sichtbar gemacht werden kann. Für das Anordnen von dreidimensionalen Objektion im Raum, wie zum Beispiel zum Verlegen von Rohrleitungen, sind diese Verfahren nicht geeignet.

Es wird nach einer Möglichkeit gesucht, eine Montagehilfe für das Anordnen von dreidimensionalen Objekten im Raum bereitzustellen.

Diese Aufgabe wird durch ein Verfahren zur Erzeugung bzw. Darstellung wenigstens einer Positionierlinie im Raum nach Anspruch 1 gelöst. Vorteilhafte Ausgestaltungen ergeben sich aus den Unteransprüchen und der nachfolgenden Beschreibung. Erfindungsgemäß wird ein Verfahren zur Darstellung wenigstens einer Positionierlinie im Raum vorgeschlagen, das als Montagehilfe verwendet wird, wobei zwei Laserstrahlen aus unterschiedlichen Richtungen in einem Schnittpunkt zusammengeführt werden und durch Verschieben des Schnittpunktes die Positionierlinie im Raum erzeugt wird. Erfindungsgemäß wird auf diese Weise eine Positionierlinie im dreidimensionalen Raum erzeugt, die beispielsweise für einen Benutzer sichtbar gemacht werden kann. Das erfindungsgemäße Verfahren ist vorteilhaft, da es eine sehr präzise Ausrichtung für die Anordnung von dreidimensionalen Objekten im Raum ermöglicht. In CN 2 485 671 Y, WO 2016/1791158 A2, und EP 1 903 371 A1 werden Laser im Raum für Unterhaltungszwecke verwendet. DE 32 36 470 A1 beschreibt das Setzen eines Markierungspunktes mit Hilfe eines räumlich wahrnehmbaren Schnittpunktes zweier Laserstrahlen.

In einer vorteilhaften Ausführungsform wird die Positionierlinie durch Nebel sichtbar gemacht. Dies ist vorteilhaft, da auf diese Weise die Positionierlinie ohne eine streuende bzw. reflektierende Oberfläche sichtbar gemacht werden kann.

In einer weiteren vorteilhaften Ausführungsform wird als Nebel Trockeneis, Wassernebel, Nebelfluid oder Aerosol verwendet. Besonders vorteilhaft wird als Nebelfluid ein Gemisch aus bidestilliertem Wasser und hochreinen Glykolen oder Glycerin verdampft, wodurch ein Aerosol-Nebel entsteht.

In einer weiteren vorteilhaften Ausführungsform weisen die Laserstrahlen unterschiedliche Wellenlängen auf. Dies ist insbesondere vorteilhaft, wenn die Wellenlängen im sichtbaren Bereich sind. Dann führen unterschiedliche Laserstrahlfarben dazu, dass die Positionierlinie eine andere Farbe aufweist als die einzelnen Laserstrahlen, weil sich die Farben im menschlichen Auge überlagern. So lässt sich die Positionierlinie besonders vorteilhaft von dem Hintergrund des übrigen durch den Nebel gestreuten Lichtes der Laserstrahlen unterscheiden. Dabei ist denkbar, dass ein Laserstrahl eine Wellenlänge im roten Bereich und ein Laserstrahl eine Wellenlänge im gelben Bereich aufweist. Auf diese Weise erscheint die Positionierlinie orange. Denkbar ist auch, dass ein Laserstrahl eine Wellenlänge im blauen Bereich und ein Laserstrahl eine Wellenlänge im gelben Bereich aufweist. Auf diese Weise erscheint die Positionierlinie grün. Denkbar ist weiterhin, dass ein Laserstrahl eine Wellenlänge im blauen Bereich aufweist und ein Laserstrahl eine Wellenlänge im roten Bereich aufweist. Auf diese Weise erscheint die Positionierlinie lila. Diese Beispiele sind nicht beschränkend zu verstehen. So könnte auch ein Laserstrahl eine Wellenlänge im Infrarotbereich aufweisen und erst durch Tragen einer entsprechenden Infrarotbrille sichtbar werden.

In einer weiteren vorteilhaften Ausführungsform ist die wenigstens eine Positionierlinie gekrümmt. Verschiedene Formen der wenigstens einen Positionierlinie sind denkbar. So kann die wenigstens eine Positionierlinie vorteilhaft auch gerade ausgebildet sein, einen Kreis im Raum darstellen oder andere Formen wie Gitternetze aufweisen. Dies ist vorteilhaft, da sie auf diese Weise zur Ausrichtung verschiedener dreidimensionaler Objekte im Raum verwendet werden kann.

In einer weiteren vorteilhaften Ausführungsform wird ein Objekt durch mehrere Positionierlinien sichtbar gemacht. Dies ist vorteilhaft, da auf diese Weise dreidimensionale Objekte in den Raum gezeichnet werden können, an deren Stelle dann reale Objekte im dreidimensionalen Raum angeordnet werden können.

Insbesondere wird das Verfahren zum Verlegen von Rohrleitungen verwendet. Hierfür lassen sich vorteilhaft kreisrunde Positionierlinien in den Raum zeichnen, die eine gewünschte Anordnung von Rohrleitungen vormarkieren.

Für Vormontagen kann zum Beispiel ein Motorblock mittels Positionierlinien eingeblendet werden. Damit können Anbauteile genau montiert werden, ohne durch den Motorblock einen störenden Gegenstand im Arbeitsbereich zu haben. Anschließend ist dann nur noch das Einsetzen und Positionieren erforderlich.

Eine erfindungsgemäße Recheneinheit, z.B. ein Steuergerät, ist, insbesondere programmtechnisch, dazu eingerichtet, ein erfindungsgemäßes Verfahren durchzuführen.

Auch die Implementierung des Verfahrens in Form eines Computerprogramms ist vorteilhaft, da dies besonders geringe Kosten verursacht, insbesondere wenn ein ausführendes Steuergerät noch für weitere Aufgaben genutzt wird und daher ohnehin vorhanden ist. Geeignete Datenträger zur Bereitstellung des Computerpogramms sind insbesondere magnetische, optische und elektrische Speicher, wie z.B. Festplatten, Flash-Speicher, EEPROMs, DVDs u.a.m. Auch ein Download eines Programms über Computernetze (Internet, Intranet usw.) ist möglich.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand eines Ausführungsbeispiels in der Zeichnung schematisch dargestellt und wird im Folgenden unter Bezugnahme auf die Zeichnung beschrieben.

### Kurze Beschreibung der Zeichnung

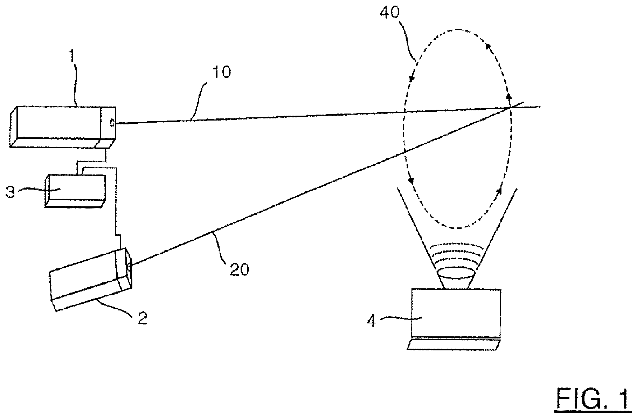

Fig. 1 zeigt zwei Laser, deren Laserstrahlen einen Schnittpunkt erzeugen, der eine Positionierlinie erzeugt.

In Fig. 1 sind schematisch zwei Laser 1, 2 dargestellt, die durch ein Steuergerät 3 miteinander verbunden sind. Die Laser 1, 2 weisen jeweils eine Optik (nicht dargestellt) auf, mit der emittierte Laserstrahlen 10, 20 im Raum verschoben werden können. Das Steuergerät 3 steuert die Optiken der Laserstrahlen 10, 20 an, um die Laserstrahlen 10, 20 im Raum zu bewegen. In diesem Fall werden die Laserstrahlen 10, 20 in einem Schnittpunkt 30 geschnitten bzw. auf den Schnittpunkt 30 gerichtet und durch Verschieben des Schnittpunktes 30 wird eine Positionierlinie 40 (gestrichelte Linie) im Raum erzeugt. In diesem Beispiel hat die Positionierlinie 40 eine kreisrunde Form und dient vorteilhaft zur Positionierung einer Rohrleitung. Weiterhin ist eine Nebelmaschine 4 dargestellt, die ein Gemisch aus bidestilliertem Wasser und hochreinen Glykolen oder Glycerin, ein sogenanntes Nebelfluid, verdampft, wodurch ein Aerosol-Nebel entsteht. Durch das Aerosol in der Luft wird die Positionierlinie 40 im Raum sichtbar gemacht. Bei Verwendung zweier Laserstrahlen 10, 20 unterschiedlicher Frequenz im sichtbaren Spektrum kann die Positionierlinie 40 mit Vorteil in einer anderen dritten Farbe für einen menschlichen Betrachter sichtbar gemacht werden.

## Patentansprüche

1. Verfahren zur Darstellung wenigstens einer Positionierlinie (40) im Raum, das als Montagehilfe verwendet wird, wobei zwei Laserstrahlen (10, 20) aus unterschiedlichen Richtungen in einem Schnittpunkt (30) zusammengeführt werden und durch Verschieben des Schnittpunktes (30) die Positionierlinie (40) im Raum erzeugt wird.

2. Verfahren nach Anspruch 1, wobei die wenigstens eine Positionierlinie (40) durch Nebel sichtbar gemacht wird.

3. Verfahren nach Anspruch 2, wobei als Nebel Trockeneis, Wassernebel, Nebelfluid oder Aerosol verwendet wird.

4. Verfahren nach einem der vorstehenden Ansprüche, wobei die Laserstrahlen (10, 20) unterschiedliche Wellenlängen aufweisen.

5. Verfahren nach einem der vorstehenden Ansprüche, wobei die wenigstens eine Positionierlinie (40) gekrümmt ist.

6. Verfahren nach einem der vorstehenden Ansprüche, wobei ein Objekt durch mehrere Positionierlinien (40) sichtbar gemacht wird.

7. Verfahren nach einem der vorstehenden Ansprüche, das zum Verlegen von Rohrleitungen verwendet wird.

8. Recheneinheit, die dazu eingerichtet ist, durch Ansteuern zweier Laser ein Verfahren nach einem der vorstehenden Ansprüche durchzuführen.

9. Computerprogramm, das eine Recheneinheit dazu veranlasst, durch Ansteuern zweier Laser ein Verfahren nach einem der Ansprüche 1 bis 7 durchzuführen, wenn es auf der Recheneinheit ausgeführt wird.

10. Maschinenlesbares Speichermedium mit einem darauf gespeicherten Computerprogramm nach Anspruch 9.

## Claims

1. A method for depicting at least one positioning line (40) in a space, which method is used as an assembly aid, wherein two laser beams (10, 20) from different directions are brought together at an intersection point (30) and the positioning line (40) is produced in the space by moving the intersection point (30).

2. The method according to claim 1, wherein the at least one positioning line (40) is made visible by mist.

3. The method according to claim 2, wherein dry ice, water mist, mist fluid or aerosol is used as the mist.

4. The method according to any of the preceding claims, wherein the laser beams (10, 20) have different wavelengths.

5. The method according to any of the preceding claims, wherein the at least one positioning line (40) is curved.

6. The method according to any of the preceding claims, wherein an object is made visible by a plurality of positioning lines (40).

7. The method according to any of the preceding claims, which is used for laying pipelines.

8. A computing unit which is configured to carry out a method according to any of the preceding claims by actuating two lasers.

9. A computer program that, when executed on a computing unit, causes the computing unit to carry out a method according to any of claims 1 to 7 by actuating two lasers.

10. A machine-readable storage medium having a computer program according to claim 9 stored thereon.

## Revendications

1. Procédé permettant de représenter au moins une ligne de positionnement (40) dans l'espace, lequel procédé est utilisé en tant qu'aide au montage, deux faisceaux laser (10, 20) provenant de directions différentes étant combinés dans un point d'intersection (30) et la ligne de positionnement (40) étant produite dans l'espace en déplaçant le point d'intersection (30).

2. Procédé selon la revendication 1, dans lequel l'au moins une ligne de positionnement (40) est rendue visible par un brouillard.

3. Procédé selon la revendication 2, dans lequel de la glace sèche, un brouillard d'eau, un fluide de brouillard ou un aérosol est utilisé en tant que brouillard.

4. Procédé selon l'une des revendications précédentes, dans lequel les faisceaux laser (10, 20) présentent des longueurs d'onde différentes.

5. Procédé selon l'une des revendications précédentes, dans lequel l'au moins une ligne de positionnement (40) est incurvée.

6. Procédé selon l'une des revendications précédentes, dans lequel un objet est rendu visible par plusieurs lignes de positionnement (40).

7. Procédé selon l'une des revendications précédentes, lequel est utilisé pour la pose de conduites.

8. Unité de calcul configurée pour mettre en oeuvre un procédé selon l'une des revendications précédentes en commandant deux lasers.

9. Programme informatique qui amène une unité de calcul à mettre en oeuvre un procédé selon l'une des revendications 1 à 7 lorsqu'il est exécuté sur l'unité de calcul en commandant deux lasers.

10. Support de stockage lisible par machine sur lequel est stocké un programme informatique selon la revendication 9.
